# EUROPEAN PATENT APPLICATION

(11) **EP 4 564 643 A1**
(43) Date of publication of application: **04.06.2025**
(21) Application number: 23856592.3
(22) Date of filing: 22.08.2023
(51) Int. Cl.: H02J 7/00, H02J 50/10

(54) **WIRELESS CHARGING APPARATUS, VEHICLE, WIRELESS CHARGING CONTROL METHOD, AND STORAGE MEDIUM**

(30) Priority: 22.08.2022 CN 202211004895
(71) Applicant: Shenzhen Yinwang Intelligent Technologies Co., Ltd., Shenzhen, Guangdong 518129 (CN)
(72) Inventor: CHENG, Yupeng, Shenzhen, Guangdong 518129 (CN)
(74) Representative: Körber, Martin Hans
(86) International application number: PCT/CN2023/114170
(87) International publication number: WO 2024/041502

(57) **Abstract**

A wireless charging apparatus, a vehicle, a wireless charging control method, and a storage medium are provided. The wireless charging apparatus includes a charging platform, an attachment part, a wireless charging part, and a control part. The charging platform is disposed in a first direction, and the charging platform is provided with a first stopper, a charging area, and a first groove in the first direction. The attachment part and the wireless charging part are disposed in the charging area. The attachment part is configured to provide an attachment force for attachment to a to-be-charged device, and the wireless charging part is configured to charge the to-be-charged device. The control part is disposed in the first groove, and the control part is configured to control the attachment force of the attachment part to increase or decrease. When the foregoing structure is used, wireless charging and vertical accommodation of a large-sized and heavy to-be-charged device like a tablet computer can be implemented, so that space occupied by the to-be-charged device during charging can be effectively reduced, and a charging environment is neat. **In** addition, non-wrapped accommodation of the to-be-charged device can be implemented, and taking and placing of the to-be-charged device is convenient and labor-saving.

## Description

### CROSS-REFERENCE TO RELATED APPLICATIONS

This application claims priority to Chinese Patent Application No. 202211004895.7, filed with the China National Intellectual Property Administration on August 22, 2022 and entitled "WIRELESS CHARGING APPARATUS, VEHICLE, WIRELESS CHARGING CONTROL METHOD, AND STORAGE MEDIUM", which is incorporated herein by reference in its entirety.

### TECHNICAL FIELD

This application relates to the field of electronic device technologies, and in particular, to a wireless charging apparatus, a vehicle, a wireless charging control method, and a storage medium.

### BACKGROUND

In a vehicle use scenario, a small-sized mobile terminal like a mobile phone may use a wireless charging platform in a vehicle for charging and accommodation. In comparison with wired charging, in wireless charging, disordered charging cables can be omitted, and a neat environment in the vehicle is kept. However, because the mobile phone wireless charging platform in the vehicle is small, a large-sized and heavy mobile terminal like a tablet computer cannot be adapted. The tablet computer cannot use the mobile phone wireless charging platform in the vehicle, and can use only wired charging. This affects a neat environment in the vehicle, accommodation is inconvenient, and effect of a neat charging environment and convenient accommodation that is the same as that of the mobile phone cannot be obtained.

### SUMMARY

This application provides a wireless charging apparatus, a vehicle, a wireless charging control method, and a storage medium, to charge a mobile terminal in a neat environment.

According to a first aspect, this application provides a wireless charging apparatus, and the wireless charging apparatus may include a charging platform, an attachment part, a wireless charging part, and a control part. The charging platform may be disposed in a first direction, and the charging platform is provided with a first stopper, a charging area, and a first groove in the first direction. The attachment part and the wireless charging part may be disposed in the charging area. The attachment part may provide an attachment force for attachment to a to-be-charged device, and the wireless charging part may charge the to-be-charged device. The control part may be disposed in the first groove, and the control part may control the attachment force of the attachment part to increase or decrease.

Technical solutions provided in this application may be applied to a vehicle, and wireless charging and vertical accommodation of a large-sized and heavy mobile terminal like a tablet computer can be implemented. This can effectively reduce space occupied by the to-be-charged device during charging, so that a charging environment is neat. In addition, non-wrapped accommodation of the to-be-charged device can be implemented, and taking and placing of the to-be-charged device is convenient and labor-saving. The to-be-charged device is placed at a stable position during charging, and a charging process is reliable.

In a specific implementation solution, the control part may include a sensor and a control unit. The sensor may sense a distance between the to-be-charged device and the charging platform. The control unit may control, when the to-be-charged device approaches the charging platform, the attachment force of the attachment part to increase, and control, when the to-be-charged device moves away from the charging platform, the attachment force of the attachment part to decrease. An interaction status between the to-be-charged device and the charging platform can be intelligently determined, so that the attachment force of the attachment part can be intelligently controlled.

In addition to the foregoing manner of disposing the control part, another manner may also be used. For example, the control part may include a button and a control unit. The button may be triggered. The control unit may control, when the button is triggered, the attachment force of the attachment part to increase or decrease. The user can actively control the attachment force of the attachment part.

In a specific implementation solution, the attachment part may be electrically connected or communicatively connected to the control part. The control part may control the attachment part to be powered on or powered off. The attachment part may provide a first attachment force when powered off, and may provide a second attachment force when powered on. The second attachment force is greater than the first attachment force. The attachment force of the attachment part may be changed, and strength of the attachment force of the attachment part may be controlled as required.

When the attachment part is specifically disposed, the attachment part may include an electromagnet. The electromagnet may provide the first attachment force when powered off, and may provide the second attachment force when powered on. A structure of the electromagnet is simple and costs are low.

In addition to the foregoing manner of disposing the attachment part, another manner may be used. For example, the attachment part may include a permanent magnet and an air suction apparatus. The permanent magnet may provide the first attachment force. The air suction apparatus may provide a third attachment force when powered on. The second attachment force is a sum of the first attachment force and the third attachment force. The permanent magnet and the air suction apparatus cooperate to realize a change of a comprehensive attachment force of the attachment part, and a change of the attachment force is flexible.

In a specific implementation solution, there may be a plurality of attachment parts, and the plurality of attachment parts may be arranged on two sides of the wireless charging part. The attachment parts located on the two sides of the wireless charging part may be jointly attached to the to-be-charged device, and may stably attach the to-be-charged device to the charging platform, so that the to-be-charged device is placed at a stable position during charging, and a charging process is reliable.

In another specific implementation solution, there may be a plurality of attachment parts, and the plurality of attachment parts may be disposed around the wireless charging part. The plurality of attachment parts disposed around the wireless charging part may be jointly attached to the to-be-charged device, so that the to-be-charged device can be stably attached to the charging platform.

In a specific implementation solution, the wireless charging part may be electrically connected or communicatively connected to the control part, and the control part may control the wireless charging part to be powered on or powered off. Intelligent control of a status of the wireless charging part can be implemented.

In a specific implementation solution, the charging area may be located between the first stopper and the first groove. In actual use, the bottom of the to-be-charged device may be supported by the first stopper, and the top of the to-be-charged device may correspond to the first groove, so that the to-be-charged device is removed from the charging platform by extending a hand into the first groove.

In another specific implementation solution, the first groove may be located between the first stopper and the charging area. In actual use, the bottom of the to-be-charged device may be supported by the first stopper, and an upper part of the bottom of the to-be-charged device may correspond to the first groove, so that the to-be-charged device is removed from the charging platform by extending a hand into the first groove.

In a specific implementation solution, the charging platform may be further provided with a second groove, and the second groove and the first groove may be respectively located on two sides of the charging area in the first direction. The second groove is disposed to facilitate removal of the to-be-charged device.

In a specific implementation solution, the control part may be disposed in the second groove. To be specific, there may be a plurality of control parts, and the plurality of control parts are disposed in the first groove and the second groove. Disposing of the plurality of control parts may make control of the attachment part and the wireless charging part more accurate.

In a specific implementation solution, a second stopper and a third stopper may be respectively disposed at two ends of the charging platform in a second direction, and the second direction may be perpendicular to the first direction. In actual use, the to-be-charged device may be placed in space enclosed by the second stopper, the third stopper, and the first stopper. The second stopper and the third stopper may jointly limit the to-be-charged device with the first stopper, so that a position of the to-be-charged device is more stable.

According to a second aspect, this application provides a vehicle, where the vehicle may include the wireless charging apparatus according to any one of the possible implementation solutions of the first aspect, and the wireless charging apparatus may be disposed in a cockpit of the vehicle. The wireless charging apparatus can implement wireless charging and vertical accommodation of a large-sized and heavy mobile terminal like a tablet computer, and an environment in the cockpit of the vehicle is neat.

According to a third aspect, this application provides a wireless charging control method. The method may include: obtaining a distance between a to-be-charged device and a charging platform; determining, based on a change of the distance between the to-be-charged device and the charging platform, that the to-be-charged device is in a state of approaching or moving away from the charging platform; controlling an attachment part to increase an attachment force when the to-be-charged device is in the state of approaching the charging platform, so that the to-be-charged device is attached to the charging platform; and controlling the attachment part to decrease the attachment force when the to-be-charged device is in the state of moving away from the charging platform. The attachment force of the to-be-charged device can be intelligently controlled.

In a specific implementation solution, the wireless charging control method provided in this application may further include: controlling a wireless charging part to be powered on when the distance between the to-be-charged device and the charging platform is equal to zero, to charge the to-be-charged device; and controlling the wireless charging part to be powered off when the to-be-charged device is in the state of moving away from the charging platform. Intelligent charging of the to-be-charged device can be implemented.

According to a fourth aspect, this application provides a computer-readable storage medium, where the computer-readable storage medium stores a computer program, and the computer program may be executed by a processor to implement the wireless charging control method in any one of the possible implementation solutions of the third aspect.

### BRIEF DESCRIPTION OF DRAWINGS

FIG. 1 is a main-view schematic diagram of a structure of a wireless charging apparatus according to an embodiment of this application;
FIG. 2 is a side-view schematic diagram of a structure of a wireless charging apparatus according to an embodiment of this application;
FIG. 3 is a schematic diagram of a usage scenario of a wireless charging apparatus according to an embodiment of this application;
FIG. 4 is a schematic diagram of another usage scenario of a wireless charging apparatus according to an embodiment of this application;
FIG. 5 is a schematic diagram of a structure of a wireless charging apparatus according to another embodiment of this application;
FIG. 6 is a schematic diagram of a distribution status of attachment parts of a wireless charging apparatus according to an embodiment of this application;
FIG. 7 is a side-view schematic diagram of a structure of a wireless charging apparatus according to an embodiment of this application;
FIG. 8 is a main-view schematic diagram of a structure of a wireless charging apparatus according to an embodiment of this application; and
FIG. 9 is a schematic flowchart of a wireless charging control method according to an embodiment of this application.

Reference numerals:
100-charging platform; 200-attachment part; 300-wireless charging part; 400-control part; 500-to-be-charged device;
101-first stopper; 102-charging area; 103-first groove; 104-second groove; 105-second stopper;
106-third stopper; and 401-button.

### DESCRIPTION OF EMBODIMENTS

The following describes in detail embodiments of this application with reference to accompanying drawings.

For ease of understanding, an application scenario of a wireless charging apparatus in this application is first described. The wireless charging apparatus provided in embodiments of this application may be used in a vehicle, may be disposed in a cockpit of the vehicle, and is used as a functional module of the cockpit of the vehicle, to implement wireless charging and accommodation of a large-sized and heavy mobile terminal like a tablet computer in the vehicle.

Currently, a wireless charging platform suitable for a small-sized mobile terminal like a mobile phone is usually configured inside a vehicle. In actual life, in addition to the mobile phone, a large-sized and heavy mobile terminal like a tablet computer is also widely used. However, because the mobile phone wireless charging platform in the vehicle is small, the tablet computer cannot adapt, the tablet computer cannot use the mobile phone wireless charging platform in the vehicle, and can use only wired charging. In this case, effect of a neat charging environment and convenient accommodation of the tablet computer, which is the same as that of the mobile phone, cannot be obtained.

Based on this, embodiments of this application provide a wireless charging apparatus, to charge the mobile terminal in the neat environment.

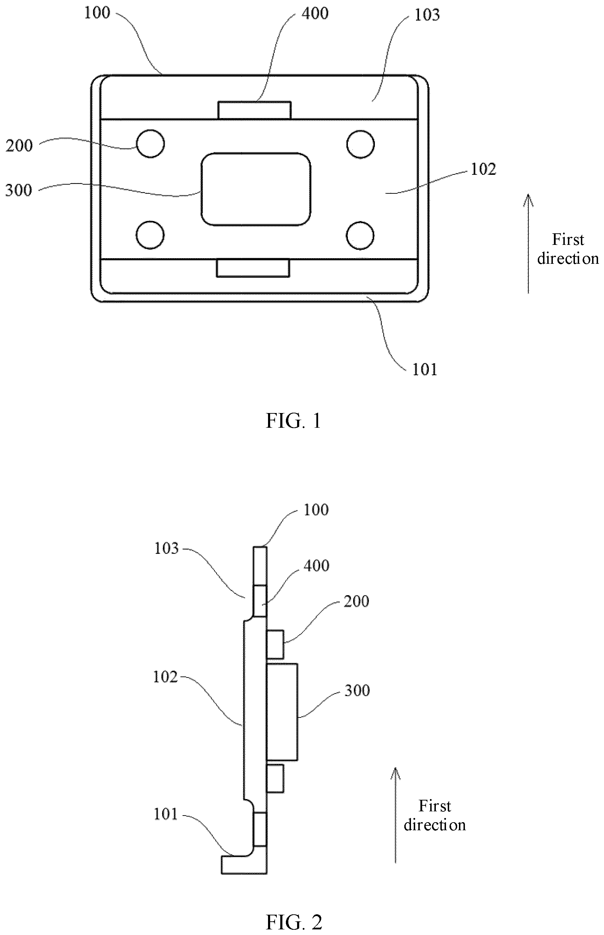

First, refer to FIG. 1 and FIG. 2. FIG. 1 is a main-view schematic diagram of a structure of a wireless charging apparatus according to an embodiment of this application, and FIG. 2 is a side-view schematic diagram of a structure of a wireless charging apparatus according to an embodiment of this application. As shown in FIG. 1 and FIG. 2, the wireless charging apparatus provided in embodiments of this application may include a charging platform 100, an attachment part 200, a wireless charging part 300, and a control part 400. The charging platform 100 may be disposed in a first direction. In actual application, the first direction may be a vertical direction, that is, the charging platform 100 may be disposed in the vertical direction. The charging platform 100 may be provided with a first stopper 101, a charging area 102, and a first groove 103 in the first direction. When the charging platform 100 is disposed in the vertical direction, the first stopper 101 may be located below the first groove 103.

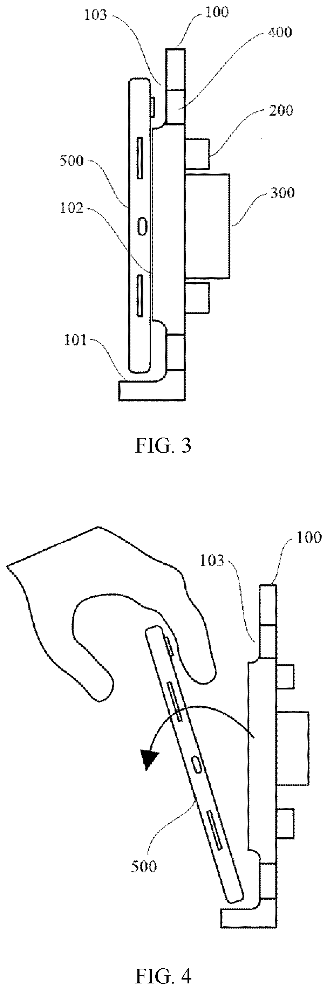

FIG. 3 is a schematic diagram of a usage scenario of a wireless charging apparatus according to an embodiment of this application. As shown in FIG. 3, when a to-be-charged device 500 is placed on the charging platform 100, the first stopper 101 may perform rough positioning. After the to-be-charged device 500 is placed, the first stopper 101 may support the to-be-charged device 500, so that a position of the to-be-charged device 500 is stable. Alternatively, the to-be-charged device 500 may be completely attached and fastened to the attachment part 200.

During actual charging, the to-be-charged device 500 may be attached to the charging area 102. For example, the to-be-charged device 500 is a tablet computer. The tablet computer has a first surface and a second surface opposite to each other. The first surface of the tablet computer has a display. The first surface of the tablet computer is defined as a front surface of the tablet computer, and the second surface of the tablet computer is defined as a back surface of the tablet computer. In actual use, the back surface of the tablet computer may be attached to the charging area 102, to implement charging of the tablet computer. The so-called attaching may be understood as that the back surface of the tablet computer is in contact with a surface of the charging area 102.

During specific arrangement, a bottom surface of the first groove 103 is lower than a plane on which the charging area 102 is located. For example, the to-be-charged device 500 is a tablet computer. The first groove 103 may be disposed to reserve sufficient depth for accommodating a rear camera module of the tablet computer, so that the first groove 103 can avoid the rear camera module of the tablet computer. The back surface of the tablet computer can be closely attached to the charging area 102, to ensure charging effect.

FIG. 4 is a schematic diagram of another usage scenario of a wireless charging apparatus according to an embodiment of this application. FIG. 4 shows a scenario in which a user reaches for the to-be-charged device 500 placed on the charging platform 100. A direction indicated by an arrow in FIG. 4 indicates a direction in which the to-be-charged device 500 is taken away from the charging platform 100. As shown in FIG. 4, the first groove 103 may provide space for the user to reach by hand, to facilitate taking of the to-be-charged device 500.

Still refer to FIG. 3. In a specific implementation, both the attachment part 200 and the wireless charging part 300 may be disposed in the charging area 102. In actual use, the attachment part 200 provides an attachment force for attachment to the to-be-charged device 500, and may support disposal of the charging platform 100 in a vertical direction. This implements vertical accommodation of the to-be-charged device 500, and reduces occupation of activity space for passengers. The wireless charging part 300 charges the to-be-charged device 500, which can balance charging of the to-be-charged device 500 and neat space in a vehicle. The wireless charging part 300 may be electrically connected to a vehicle power supply unit, and operation of the wireless charging apparatus may be independently controlled, and may not interact with a control system in the vehicle. The control part 400 may be disposed in the first groove 103, and specifically may be embedded in the bottom surface of the first groove 103. In actual use, the control part 400 may control the attachment force of the attachment part 200 to increase or decrease.

The wireless charging apparatus provided in embodiments of this application may be used in a vehicle, and wireless charging and vertical accommodation of a large-sized and heavy mobile terminal like a tablet computer can be implemented. This can effectively reduce space occupied by the to-be-charged device 500 during charging, so that a charging environment is neat. In addition, non-wrapped accommodation of the to-be-charged device 500 can be implemented, and taking and placing of the to-be-charged device 500 is convenient and labor-saving, and is not easy to collide. The to-be-charged device 500 is placed at a stable position during charging, and a charging process is reliable.

In a specific implementation, a plurality of wireless charging apparatuses of different specifications may be designed, and locations and sizes of charging areas 102 of the wireless charging apparatuses of different specifications are different. Therefore, the wireless charging apparatuses may perform wireless charging for mobile terminals of different sizes, for example, may perform wireless charging for tablet computers and mobile phones of different sizes.

In actual application, the wireless charging apparatus may be installed on a door panel of a vehicle. This position can greatly improve convenience of taking and placing the to-be-charged device 500 by a passenger, and does not occupy activity space in the vehicle. In addition, the wireless charging apparatus may also be installed in an upper position on the back of a vehicle seat, or may be installed in another position in the vehicle.

It may be understood that, in addition to being used in a vehicle, the wireless charging apparatus provided in embodiments of this application may be further used in a means of transportation like an aircraft, a ship, or a train. For example, each seat on an international flight is equipped with a tablet entertainment terminal that locks with a folding support, and the tablet entertainment terminal is normally accommodated in a seat armrest. The wireless charging apparatus in this application may be locked on a folding support, and is normally placed in a seat armrest. A passenger may place a tablet computer in the seat armrest for charging, or the passenger may take out and unfold the wireless charging apparatus, and place the tablet computer on the wireless charging apparatus for use. Similarly, the wireless charging apparatus in this application may also be used in a seat with an armrest of a ship or a train.

In some implementations, the control part 400 may control, when the to-be-charged device 500 approaches the charging platform 100, the attachment force of the attachment part 200 to increase, and control, when the to-be-charged device 500 is attached to the charging area 102, the attachment force of the attachment part 200 to increase to a maximum. The control part 400 may control, when the to-be-charged device 500 moves away from the charging platform 100, the attachment force of the attachment part 200 to decrease, and control, when the to-be-charged device 500 is at a distance from the charging area 102, the attachment force of the attachment part 200 to decrease to a minimum. During specific implementation, the control part 400 may include a sensor and a control unit, and the sensor may be electrically connected or communicatively connected to the control unit. The sensor may sense a distance between the to-be-charged device 500 and the charging platform 100, to intelligently determine an interaction status (approaching or moving away from) between the to-be-charged device 500 and the charging platform 100. The control unit may control, when the to-be-charged device 500 approaches the charging platform 100, the attachment force of the attachment part 200 to increase, and control, when the to-be-charged device 500 moves away from the charging platform 100, the attachment force of the attachment part 200 to decrease. Specifically, the sensor may be an infrared proximity sensor. A form of the control unit may be a chip, a circuit board, a packaging module, or the like.

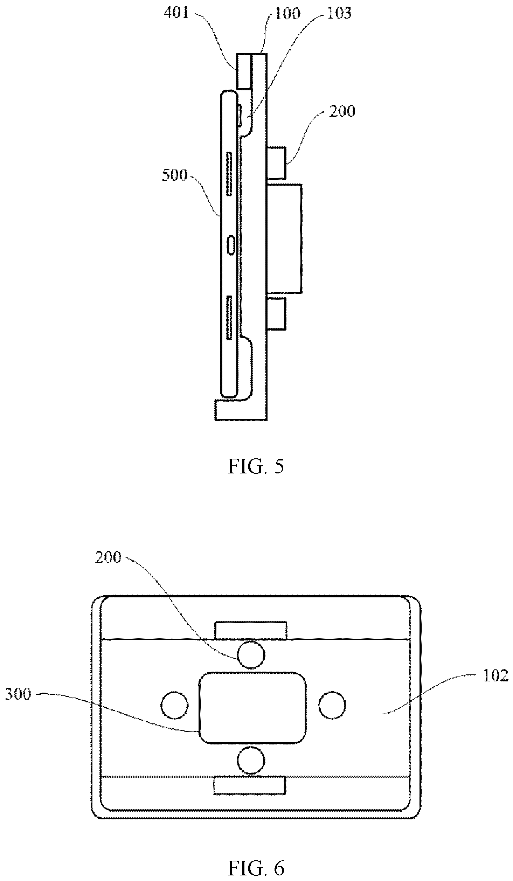

FIG. 5 is a schematic diagram of a structure of a wireless charging apparatus according to another embodiment of this application. As shown in FIG. 5, in some other implementations, a control part may include a button 401 and a control unit. The button 401 may be triggered (pressed). When the button 401 is pressed, the control unit may control an attachment force of the attachment part 200 to increase or decrease. By pressing the button 401, a user can actively control increasing of the attachment force of the attachment part 200, so that the to-be-charged device 500 is attached to the charging platform 100, and the user can actively control decreasing of the attachment force of the attachment part 200, to facilitate taking of the to-be-charged device 500.

In a specific implementation, the button 401 may be a low-cost physical button, and the button 401 may be disposed in the first groove 103. In this case, a connection status between the attachment part 200 and the control unit may be that the attachment part 200 is electrically connected or communicatively connected to the control unit through the button 401, or that the attachment part 200 and the button 401 are separately electrically connected or communicatively connected to the control unit. When the attachment part 200 is electrically connected or communicatively connected to the control unit through the button 401, the button 401 functions as a switch to control the attachment part 200 to be powered on or off with the control unit. When the button 401 is pressed to enable the attachment part 200 to be powered on with the control unit, the control unit may control the attachment force of the attachment part 200 to increase, and when the button 401 is pressed again to enable the attachment part 200 to be powered off with the control unit, the attachment force of the attachment part 200 decreases. When the attachment part 200 and the button 401 are electrically connected or communicatively connected to the control unit separately, the control unit controls the attachment force of the attachment part 200 to increase when the button 401 is pressed, and the control unit controls the attachment force of the attachment part 200 to decrease when the button 401 is pressed again. Specifically, when the button 401 is pressed, the button 401 may send a first trigger signal to the control unit. When receiving the first trigger signal, the control unit controls the attachment force of the attachment part 200 to increase. When the button 401 is pressed again, the button 401 may send a second trigger signal to the control unit. When receiving the second trigger signal, the control unit controls the attachment force of the attachment part 200 to decrease.

In another specific implementation, the button 401 may be a virtual button. The button 401 may be disposed on a control screen of a vehicle cockpit, or the button 401 may be disposed on a mobile phone, to remotely control the attachment force of the attachment part 200 to increase or decrease. Alternatively, a display may be disposed in the first groove 103, and the button 401 may be disposed on the display. In this case, the button 401 and the attachment part 200 may be electrically connected or communicatively connected to the control unit separately. When the button 401 is pressed, the control unit controls the attachment force of the attachment part 200 to increase, and when the button 401 is pressed again, the control unit controls the attachment force of the attachment part 200 to decrease. For a specific implementation, refer to the foregoing embodiment.

In a specific implementation, more energy may be applied to the button 401. For example, the button 401 may control the attachment part 200 to generate attachment forces at different levels, and strength of the attachment forces at different levels are different, to control attachment force strength of the attachment part 200 more accurately.

Refer to FIG. 3 again. In a possible embodiment, the attachment part 200 is electrically connected or communicatively connected to the control part 400, and the control part 400 may control the attachment part 200 to be powered on or powered off. The attachment part 200 may provide a first attachment force when powered off, and may provide a second attachment force when powered on, and the second attachment force is greater than the first attachment force.

In some implementations, the attachment part 200 may include an electromagnet, and the electromagnet may be disposed in the charging area 102. The electromagnet may be a magnetization-increasing electromagnet, and may specifically include a permanent magnet and a coil wound around the permanent magnet. The electromagnet may provide the first attachment force when powered off, and may provide the second attachment force when powered on. Specifically, when the coil is powered off, the permanent magnet may provide the first attachment force, and the attachment part 200 has a weak magnetic force, and may provide a weak attachment force for the to-be-charged device 500. When the coil is powered on, the whole electromagnet may provide the second attachment force, the magnetic force of the attachment part 200 increases, and the attachment force provided for the to-be-charged device 500 increases, so that the to-be-charged device 500 is stably attached to the charging platform 100. This implements control of the attachment force of the attachment part 200. When the coil is powered on, magnetic strength of the electromagnet is related to a magnitude of an electrified current, and a magnitude of the first attachment force may be fixed or change gradually.

In some other implementations, the attachment part 200 may include a permanent magnet and an air suction apparatus, and the permanent magnet and the air suction apparatus may be separately disposed in the charging area 102. During specific implementation, the air suction apparatus has an air suction port, and the air suction port of the air suction apparatus may be exposed to the charging area 102. The permanent magnet may provide the first attachment force, and the air suction apparatus may provide a third attachment force when powered on. The second attachment force is a sum of the first attachment force and the third attachment force, so that the second attachment force is greater than the first attachment force. Specifically, the permanent magnet has a weak magnetic force, and may provide a weak attachment force for the to-be-charged device 500. The air suction apparatus sucks air when powered on, and creates a negative pressure environment between the to-be-charged device 500 and the charging area 102 to provide the third attachment force. The air suction apparatus can provide a strong attachment force for the to-be-charged device 500, and stably attaches the to-be-charged device 500 to the charging platform 100. This implements control of a comprehensive attachment force of the attachment part 200. When the to-be-charged device 500 is a tablet computer, the air suction apparatus may specifically create a negative pressure environment between a back surface of the tablet computer and the charging area 102 when the tablet computer approaches the charging area 102, to provide the third attachment force. Strength of the attachment force provided by the air suction apparatus is related to a magnitude of an electrified current and a specification of the air suction apparatus. Similarly, a magnitude of the first attachment force may be fixed or change gradually.

In a specific implementation, there may be a plurality of attachment parts 200. As shown in FIG. 1, FIG. 1 shows a distribution status of the attachment parts 200. Specifically, the plurality of attachment parts 200 may be arranged on two sides of the wireless charging part 300 in a plane in which the charging area 102 is located. The attachment parts 200 on the two sides of the wireless charging part 300 are jointly attached to the to-be-charged device 500, and the to-be-charged device 500 may be stably attached to the charging platform 100, and a position of the to-be-charged device 500 relative to the wireless charging part 300 may also be stable.

FIG. 6 is a schematic diagram of a distribution status of attachment parts of a wireless charging apparatus according to an embodiment of this application. FIG. 6 shows another distribution status of the attachment parts 200. As shown in FIG. 6, specifically, a plurality of attachment parts 200 may be disposed around the wireless charging part 300 in a plane in which the charging area 102 is located, or a to-be-charged device may be stably attached to a charging platform. During specific implementation, when the attachment parts 200 include an air suction apparatus, the plurality of attachment parts 200 may jointly include one air suction apparatus. The air suction apparatus may have a plurality of air suction ports, and one attachment part 200 may correspond to at least one air suction port.

Refer to FIG. 3 again. In some implementations, the wireless charging part 300 may have a sensing function. For example, the wireless charging part 300 may charge the to-be-charged device 500 when sensing that a distance between the to-be-charged device 500 and the charging platform 100 is equal to zero, that is, when the to-be-charged device 500 is attached to the charging area 102. Alternatively, the wireless charging part 300 may be powered on when sensing that a distance between the to-be-charged device 500 and the charging platform 100 reaches a specified distance. In this case, a distance between the to-be-charged device 500 and the charging area 102 is small and close. The sensing function of the wireless charging part 300 may be implemented by a sensor. When the control part 400 includes the sensor, the wireless charging part 300 may share the sensor with the control part 400.

In some other implementations, the wireless charging part 300 may be controlled by the control part 400. The wireless charging part 300 may be electrically connected or communicatively connected to the control part 400. In actual use, the wireless charging part 300 is controlled by the control part 400 to be powered on or powered off. Specifically, the wireless charging part 300 may be electrically connected or communicatively connected to a control unit.

In a specific implementation, when the control part 400 includes a sensor, the control unit may control the wireless charging part 300 to be powered on when a distance between the to-be-charged device 500 and the charging platform 100 is equal to zero, that is, the control unit may control the wireless charging part 300 to be powered on when the to-be-charged device 500 is attached to the charging area 102, to charge the to-be-charged device 500. Alternatively, the control unit may be powered on when a distance between the to-be-charged device 500 and the charging platform 100 reaches a specified distance. In this case, a distance between the to-be-charged device 500 and the charging area 102 is small and close. The control unit may control the wireless charging part 300 to be powered off when the to-be-charged device 500 moves away from the charging platform 100.

In another specific implementation, with reference to FIG. 5, when the control part 400 includes the button 401, and the button 401 is pressed, the control unit may control the wireless charging part 300 to be powered on or powered off, so that a user can actively control power-on or power-off of the wireless charging part 300.

During specific implementation, when the button 401 is a physical button, a connection status between the wireless charging part 300 and the control unit may be that the wireless charging part 300 is electrically connected or communicatively connected to the control unit through the button 401, or may be that the wireless charging part 300 and the button 401 are electrically connected or communicatively connected to the control unit separately. When the wireless charging part 300 is electrically connected or communicatively connected to the control unit through the button 401, the button 401 functions as a switch to control the wireless charging part 300 to be powered on or off with the control unit. Specifically, when the button 401 is pressed to enable the wireless charging part 300 to be powered on with the control unit, the wireless charging part 300 is powered on, and the wireless charging part 300 may charge the to-be-charged device 500. When the button 401 is pressed again to enable the wireless charging part 300 to be powered off with the control unit, the wireless charging part 300 is powered off, and the wireless charging part 300 cannot charge the to-be-charged device 500. When the wireless charging part 300 and the button 401 are electrically connected or communicatively connected to the control unit separately, the control unit controls the wireless charging part 300 to be powered on when the button 401 is pressed, and the control unit controls the attachment part 200 to be powered off when the button 401 is pressed again. Specifically, when the button 401 is pressed, the button 401 may send a first trigger signal to the control unit. When receiving the first trigger signal, the control unit controls the wireless charging part 300 to be powered on. When the button 401 is pressed again, the button 401 may send a second trigger signal to the control unit. When receiving the second trigger signal, the control unit controls the wireless charging part 300 to be powered off.

During specific implementation, when the button 401 is a virtual button, the button 401 and the wireless charging part 300 may be electrically connected or communicatively connected to the control unit separately. When the button 401 is pressed, the control unit controls the wireless charging part 300 to be powered on. When the button 401 is pressed again, the control unit controls the wireless charging part 300 to be powered off. For a specific implementation, refer to the foregoing embodiment.

In a possible embodiment, the charging area 102 may be located between the first stopper 101 and the first groove 103, that is, the first groove 103 and the first stopper 101 may be respectively located on two sides of the charging area 102 in a first direction. During specific implementation, the first stopper 101 and the first groove 103 may respectively approach two ends of the charging platform 100 in the first direction. The two ends of the charging platform 100 in the first direction are respectively defined as a first end and a second end of the charging platform 100. The first stopper 101 may be disposed at the first end of the charging platform 100, and the first groove 103 may be disposed at the second end of the charging platform 100. The charging area 102 is located between the first end and the second end of the charging platform 100. When the first direction is a vertical direction, the first end of the charging platform 100 may be located below the second end.

In another possible embodiment, the first groove 103 may be located between the first stopper 101 and the charging area 102, that is, the first groove 103 and the first stopper 101 may be located on a same side of the charging area 102 in the first direction. During specific implementation, the first stopper 101 and the first groove 103 may be disposed close to a same end of the charging platform 100 in the first direction. For example, both the first stopper 101 and the first groove 103 may be disposed close to the first end of the charging platform 100.

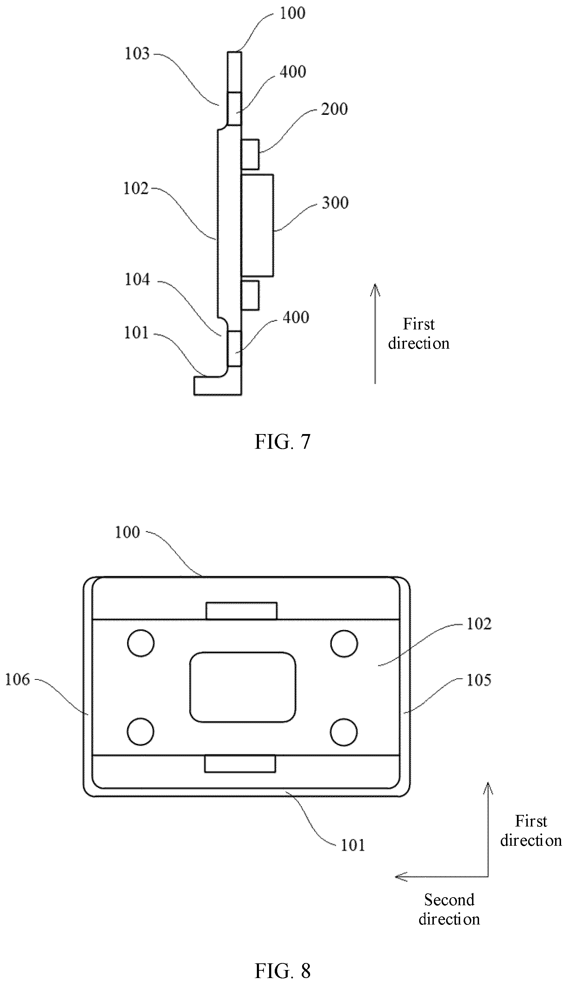

FIG. 7 is a side-view schematic diagram of a structure of a wireless charging apparatus according to an embodiment of this application. As shown in FIG. 7, in a possible embodiment, the charging platform 100 may be further provided with a second groove 104, and the second groove 104 and the first groove 103 may be respectively located on two sides of the charging area 102 in the first direction. In a specific implementation, when the charging area 102 is located between the first stopper 101 and the first groove 103, that is, the first groove 103 and the first stopper 101 are respectively located on the two sides of the charging area 102 in the first direction, the second groove 104 may be disposed between the charging area 102 and the first stopper 101. Specifically, the second groove 104 and the first stopper 101 may approach a same end of the charging platform 100, and the second groove 104 and the first groove 103 may be separately located at two ends of the charging platform 100. In another specific implementation, when the first groove 103 is located between the first stopper 101 and the charging area 102, that is, the first groove 103 and the first stopper 101 are located on a same side of the charging area 102 in the first direction, the second groove 104 and the first groove 103 may be respectively disposed close to the two ends of the charging platform 100 in the first direction.

In a specific implementation, the control part 400 may be disposed in the second groove 104, to be specific, there may be a plurality of control parts 400, and the plurality of control parts 400 are disposed in the first groove 103 and the second groove 104. Disposing of the plurality of control parts 400 may make control of the attachment part 200 and the wireless charging part 300 more accurate. For example, when the control part 400 includes a sensor, the plurality of control parts 400 may jointly sense a distance between a to-be-charged device and the charging platform 100, so that sensing of the distance is more accurate. In this case, the plurality of control parts 400 may share one control unit. That is, the plurality of control parts 400 may include one control unit and a plurality of sensors as a whole.

FIG. 8 is a main-view schematic diagram of a structure of a wireless charging apparatus according to an embodiment of this application. As shown in FIG. 8, in a possible embodiment, a second stopper 105 and a third stopper 106 may be respectively disposed at two ends of the charging platform 100 in a second direction. The second direction may be a direction perpendicular to the first direction in a plane in which the charging area 102 is located. The two ends of the charging platform 100 in the second direction are respectively defined as a third end and a fourth end of the charging platform 100. The second stopper 105 may be disposed on the third end of the charging platform 100, and the third stopper 106 may be disposed on the fourth end of the charging platform 100. In actual use, a to-be-charged device may be placed in space enclosed by the second stopper 105, the third stopper 106, and the first stopper 101. The second stopper 105 and the third stopper 106 may jointly limit the to-be-charged device with the first stopper 101, so that a position of the to-be-charged device is more stable. During specific implementation, the second stopper 105 may be connected to the first stopper 101, and the third stopper 106 may also be connected to the first stopper 101. Therefore, the first stopper 101, the second stopper 105, and the third stopper 106 may be connected as a whole to form groove-shaped space.

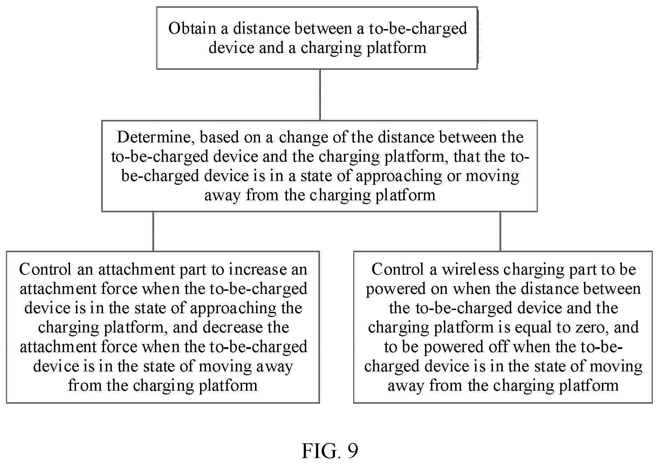

FIG. 9 is a schematic flowchart of a wireless charging control method according to an embodiment of this application. Refer to FIG. 9 and FIG. 3. An embodiment of this application further provides a wireless charging control method. The method may specifically include the following steps:
obtaining a distance between the to-be-charged device 500 and the charging platform 100, where specifically, the distance between the to-be-charged device 500 and the charging platform 100 may be sensed by a sensor, and a distance signal sent by the sensor may be received by a control unit;
determining, based on a change of the distance between the to-be-charged device 500 and the charging platform 100, that the to-be-charged device 500 is in a state of approaching or moving away from the charging platform 100, where specifically, the control unit may determine, based on the received distance signal, that the to-be-charged device 500 is in a state of approaching or moving away from the charging platform 100;
controlling the attachment part 200 to increase an attachment force when the distance between the to-be-charged device 500 and the charging platform 100 is less than a preset distance, and the to-be-charged device 500 is in the state of approaching the charging platform 100, so that the to-be-charged device 500 can be attached to the charging platform 100, where specifically, the attachment part 200 may be controlled by the control unit to increase the attachment force, and the preset distance may be set to be less than a sensing range of the sensor; and
controlling the attachment part 200 to decrease the attachment force when the to-be-charged device 500 is in the state of moving away from the charging platform 100, where specifically, the attachment part 200 may be controlled by the control unit to decrease the attachment force.

In a possible embodiment, the wireless charging control method may further include the following steps:
controlling the wireless charging part 300 to be powered on when the distance between the to-be-charged device 500 and the charging platform 100 is equal to zero, that is, controlling the wireless charging part 300 to be powered on when the to-be-charged device 500 is attached to the charging area 102, to charge the to-be-charged device 500, where specifically, the wireless charging part 300 may be controlled by the control unit to be powered on; and
controlling the wireless charging part 300 to be powered off when the to-be-charged device 500 is in the state of moving away from the charging platform 100, where specifically, the wireless charging part 300 may be controlled by the control unit to be powered off.

Based on the foregoing embodiments, an embodiment of this application further provides a computer-readable storage medium, where the computer-readable storage medium stores a computer program, and the computer program is executed by a processor to implement the wireless charging control method in the foregoing embodiments.

A person skilled in the art should understand that embodiments of this application may be provided as methods, systems, or computer program products. Therefore, this application may be in a form of a hardware-only embodiment, a software-only embodiment, or an embodiment combining software and hardware aspects. In addition, this application may use a form of a computer program product that is implemented on one or more computer-usable storage media (including but not limited to a magnetic disk memory, an optical memory, and the like) that include computer-usable program code.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. A wireless charging apparatus, comprising a charging platform, an attachment part, a wireless charging part, and a control part, wherein
the charging platform is disposed in a first direction, and the charging platform is provided with a first stopper, a charging area, and a first groove in the first direction;
the attachment part and the wireless charging part are disposed in the charging area, the attachment part is configured to provide an attachment force for attachment to a to-be-charged device, and the wireless charging part is configured to charge the to-be-charged device; and
the control part is disposed in the first groove, and the control part is configured to control the attachment force of the attachment part to increase or decrease.

2. The wireless charging apparatus according to claim 1, wherein the control part comprises a sensor and a control unit; the sensor is configured to sense a distance between the to-be-charged device and the charging platform; and the control unit is configured to: when the to-be-charged device approaches the charging platform, control the attachment force of the attachment part to increase, and when the to-be-charged device moves away from the charging platform, control the attachment force of the attachment part to decrease.

3. The wireless charging apparatus according to claim 1, wherein the control part comprises a button and a control unit; the button is configured to be triggered; and the control unit is configured to control, when the button is triggered, the attachment force of the attachment part to increase or decrease.

4. The wireless charging apparatus according to any one of claims 1 to 3, wherein the attachment part is electrically connected or communicatively connected to the control part; the control part is configured to control the attachment part to be powered on or powered off; and the attachment part is configured to provide a first attachment force when powered off, and provide a second attachment force when powered on, wherein the second attachment force is greater than the first attachment force.

5. The wireless charging apparatus according to claim 4, wherein the attachment part comprises an electromagnet, and the electromagnet provides the first attachment force when powered off, and provides the second attachment force when powered on.

6. The wireless charging apparatus according to claim 4, wherein the attachment part comprises a permanent magnet and an air suction apparatus, the permanent magnet is configured to provide the first attachment force, and the air suction apparatus is configured to provide a third attachment force when powered on, wherein the second attachment force is a sum of the first attachment force and the third attachment force.

7. The wireless charging apparatus according to any one of claims 1 to 6, wherein there are a plurality of attachment parts, and the plurality of attachment parts are arranged on two sides of the wireless charging part.

8. The wireless charging apparatus according to any one of claims 1 to 6, wherein there are a plurality of attachment parts, and the plurality of attachment parts are disposed around the wireless charging part.

9. The wireless charging apparatus according to any one of claims 1 to 8, wherein the wireless charging part is electrically connected or communicatively connected to the control part, and the control part is configured to control the wireless charging part to be powered on or powered off.

10. The wireless charging apparatus according to any one of claims 1 to 9, wherein the charging area is located between the first stopper and the first groove.

11. The wireless charging apparatus according to any one of claims 1 to 9, wherein the first groove is located between the first stopper and the charging area.

12. The wireless charging apparatus according to any one of claims 1 to 11, wherein the charging platform is further provided with a second groove, and the second groove and the first groove are respectively located on two sides of the charging area in the first direction.

13. The wireless charging apparatus according to claim 12, wherein the control part is disposed in the second groove.

14. The wireless charging apparatus according to any one of claims 1 to 13, wherein a second stopper and a third stopper are respectively disposed at two ends of the charging platform in a second direction, and the second direction is perpendicular to the first direction.

15. A vehicle, comprising the wireless charging apparatus according to any one of claims 1 to 14, wherein the wireless charging apparatus is disposed in a cockpit of the vehicle.

16. A wireless charging control method, comprising:
obtaining a distance between a to-be-charged device and a charging platform;
determining, based on a change of the distance between the to-be-charged device and the charging platform, that the to-be-charged device is in a state of approaching or moving away from the charging platform;
controlling an attachment part to increase an attachment force when the to-be-charged device is in the state of approaching the charging platform, so that the to-be-charged device is attached to the charging platform; and
controlling the attachment part to decrease the attachment force when the to-be-charged device is in the state of moving away from the charging platform.

17. The wireless charging control method according to claim 16, further comprising:
controlling a wireless charging part to be powered on when the distance between the to-be-charged device and the charging platform is equal to zero, to charge the to-be-charged device; and
controlling the wireless charging part to be powered off when the to-be-charged device is in the state of moving away from the charging platform.

18. A computer-readable storage medium, wherein the computer-readable storage medium stores a computer program, and the computer program is executed by a processor to implement the wireless charging control method according to claim 16 or 17.
